# EUROPEAN PATENT SPECIFICATION

(11) **EP 0 626 041 B1**
(45) Date of publication and mention of the grant of the patent: **12.08.1998**
(21) Application number: 93903718.0
(22) Date of filing: 11.02.1993
(51) Int. Cl.: F16B 13/08, B23B 29/034

(54) **MASONRY ANCHORS**
MAUERANKER
DISPOSITIF D'ANCRAGE POUR OUVRAGES DE MA ONNERIE

(30) Priority: 11.02.1992 AU 789/92
(43) Date of publication of application: 30.11.1994
(73) Proprietor: RAMSET FASTENERS (AUST.) PTY. LTD., Croydon North, VIC 3136 (AU)
(72) Inventor: HOLLINGSHEAD, Neil, David, Hawthorn, VIC 3122 (AU); CLARK, Philip, Charles, Vermont South, VIC 3133 (AU)
(74) Representative: Bibby, William Mark
(86) International application number: AU9300055
(87) International publication number: WO9316291

(56) References cited:
- EP-A- 0 343 653
- AU-A- 2 433 084
- AU-B- 5 351 679
- DE-A- 2 346 280
- DE-A- 2 730 618
- DE-A- 3 708 080
- DE-B- 1 500 813

## Description

The present invention relates to masonry anchors and more particularly to so-called undercut anchors.

Undercut anchors are typically used in anchoring situations where the anchor is likely to be subjected to high stress and failure could be critical. They may, for example be used to provide an explosion resistant anchorage. Undercut anchors are also used when anchoring within the tension zone of a concrete slab or beam where the concrete may be liable to cracking. Generally speaking, previously proposed undercut anchors operate by interacting with an undercut or enlargement formed within the inner or base part of a hole drilled into the masonry. In order to ensure correct setting, the undercut must be correctly formed at the required depth within the hole. As the undercut is not itself visible from the surface of the masonry an operator must rely on observation and/or "feel" to determine that the undercut has been correctly formed and that the anchor is properly set. While some anchors do provide an indication that the setting is incorrect, nevertheless the anchor may still be usable although the anchorage strength will be considerably reduced. The incorrect setting of the anchor may, however, not be apparent on subsequent inspection and therefore inspection staff or supervisory staff may not be aware that the anchorage will not function to the design requirements.

DE-A-27 30 618 discloses a masonry anchor for use in an undercut hole having a nut portion and a plurality of segments movable between a contracted configuration in which the anchor is able to pass through the hole and an expanded configuration in which the segments displace outwardly into the undercut to provide anchorage within the undercut. This anchor suffers from the disadvantages discussed above in that it is not possible to ascertain whether the segments have fully deployed into their expanded configuration within the undercut.

The present invention seeks to provide an undercut anchor which is unusable unless it is correctly set.

According to the present invention there is provided a masonry anchor for use in a hole having along its length an undercut formation which tapers in cross-sectional area in a direction towards the base of the hole with the base end of the undercut being spaced from the base of the hole to define an end portion of the hole beyond the undercut, and a larger diameter portion of the undercut being connected to the wall of the hole outwardly of the undercut by an annular abutment surface which faces towards the base of the hole, said anchor comprising a nut portion of a size to pass. through the hole and, outwardly of the nut portion, an anchor portion comprising a plurality of segments biased outwardly to move between a contracted configuration in which the anchor portion is of an outside diameter to pass through the hole and an expanded configuration in which the segments displace outwardly into the undercut into a formation which substantially corresponds with that of the undercut, the segments having an axially outer face adapted to bear against the annular abutment surface of the undercut in the expanded configuration whereby the segments act as struts in compression to transfer compressive loading to the annular abutment surface of the undercut when an anchoring bolt is tightened into the nut portion, characterised in that the anchor is arranged for installation into the hole by being mounted on the tip end of an installation tool having a shank of reduced cross-sectional size relative to the tip end, and the radially inner surfaces of the segments define a passage through which the tool shank extends, the cross-sectional size of the passage being less than the thread diameter of the nut portion until the segments are in their expanded condition to thereby preclude release of the tip end of the tool from the anchor after installation if the segments are not correctly deployed into their expanded configuration within the undercut.

Preferably, to permit withdrawal of the anchor, the tool is able to displace the anchor into the base end portion of the hole to thereby cause displacement of the segments into their contracted configuration, the segments being retained in that configuration for withdrawal of the anchor past the undercut formation.

Preferably, the segments are retained in their contracted configuration by screwing the threaded section further into the nut portion to permit cooperation between the anchor and means on the tool for retaining the segments in their retracted condition.

Preferably, the anchor comprises compression spring means extending from the nut portion to engage the base of the hole when the segments are in their expanded configuration within the undercut, said compression spring means being compressible to permit movement of the nut portion and anchor portion into the base end portion of the hole for subsequent withdrawal.

Preferably, the segments are supported from the nut portion by spring fingers which apply a radially outwards bias to the segments.

In a preferred embodiment, the presence of the bolt within the anchor portion prevents inwards displacement of the segments from the undercut. The bolt may also be used in conjunction with a spacer sleeve interposed between the shank of the bolt and the wall of the hole. The spacer sleeve may include at its inner end portion means engageable with the segments to positively force the segments into engagement with the peripheral surface of the undercut and also to reinforce the hole in the zone of the undercut to prevent inwards collapse of the concrete in that zone. This reinforcing portion may be connected to a main body of the spacer sleeve by a zone which is collapsible axially to permit correct placement of the reinforcing portion relative to the undercut and also to permit a component to be drawn down firmly against the surface of the masonry upon tightening of the bolt.

Embodiments of the invention will now be described by way of example only with reference to the accompanying drawings in which:-
Figure 1 is a section showing the form of the hole with which the anchor of the preferred embodiment is used;

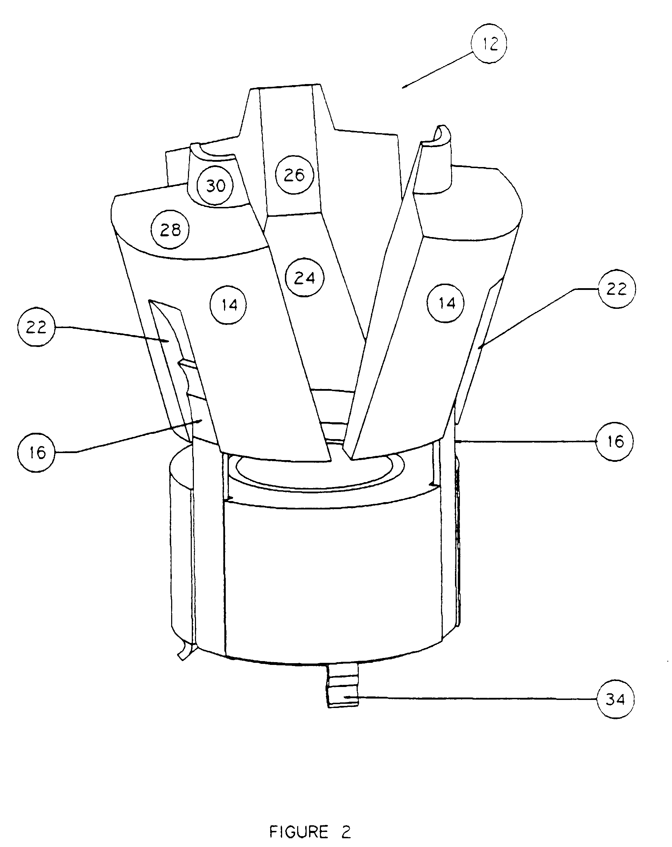

Figure 2 is a perspective view of the anchor of the preferred embodiment, with a base spring of the anchor being omitted;

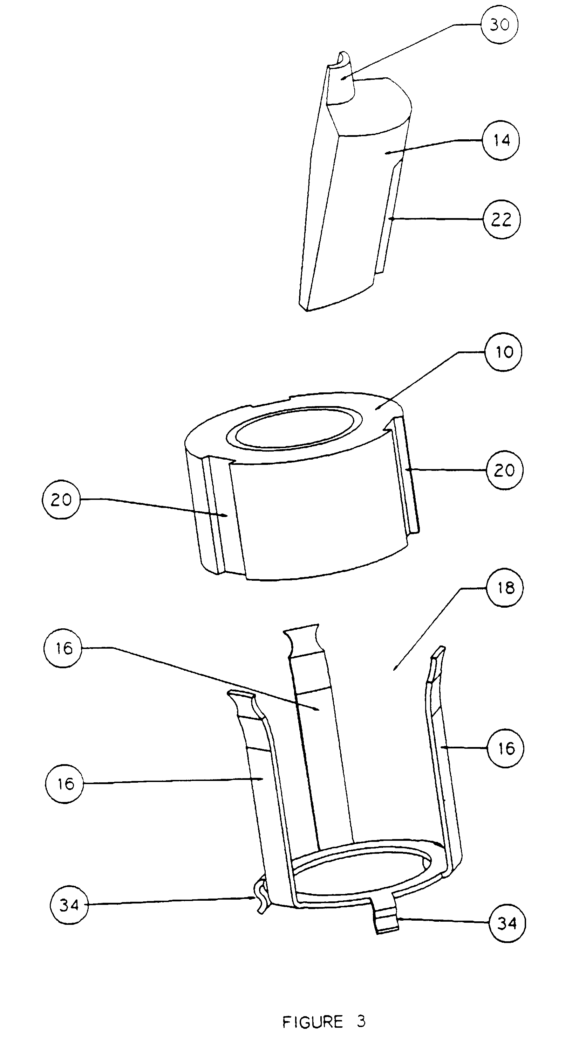

Figure 3 is an exploded view showing a nut, a retainer segment, and a retainer clip of the anchor;
Figure 4 shows the anchor mounted on an insertion tool prior to insertion into the hole;
Figures 5A to SC show schematically successive stages of the insertion of the anchor into the hole and removal of the tool;
Figures 6A and 6B show schematically successive stages in the placement of the bolt into the anchor;
Figures 7A to 7F show schematically successive stages in the insertion and then the removal of the tool with the anchor in the event that the anchor is unable to be correctly set within the hole;
Figure 8 is a section showing a modified form of spacer assembly for use with the anchor; and
Figure 9 is a section of a drill for forming the undercut in the hole.

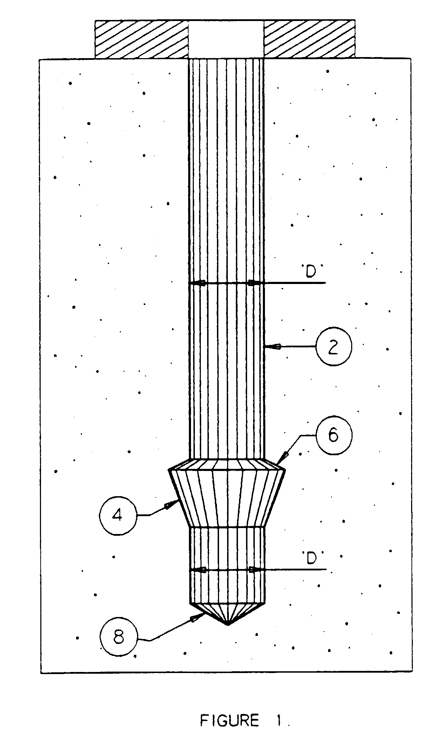

Before describing the anchor itself, we will first describe the undercut hole and the manner in which it is formed. The hole is formed by drilling to a specified depth using a standard masonry drill bit which carries a depth-limiting collar which bears against the surface of the masonry when the correct depth has been reached. This operation forms a primary cylindrical hole 2 having a diameter D as marked in Figure 1. The undercut is then formed as a secondary operation to enlarge a part of the primary cylindrical hole. The undercut is formed using an undercutting drill which forms a conical enlargement 4 which diverges in a direction towards the open end of the primary hole 2 and which terminates in an annular shoulder 6 which forms a load-bearing abutment surface and which connects the wider end of the undercut to the adjacent part of the primary cylindrical hole 2. During the forming of the undercut, the undercutting drill is supported from the base 8 of the primary cylindrical hole 2 to ensure that the undercut is formed at the prescribed depth within the primary hole. An undercutting drill for forming the undercut will be described subsequently.

The undercut anchor comprises a cylindrical nut 10 of a diameter slightly smaller than the diameter D of the primary cylindrical hole. The nut 10 carries at its outer face (that is, its face which, when the anchor is installed, lies closest to the open end of the hole 2) an anchoring element 12 of annular form and composed of a plurality of segments 14. As shown there are three such segments 14. The segments 14 are supported from the nut 10 by spring arms 16 of a retainer clip 18 carried by the nut 10. Each spring arm 16 mounts a different one of the segments 14 and biases the segment radially outwardly into a configuration in which the outer surfaces of the segments 14 lie on a surface substantially equivalent to the diverging conical surface of the undercut 4. It is to be noted that the segments 14 are movable against the bias of the spring arms 16 from this expanded configuration into a contracted configuration in which the outer surfaces of the segments 14 substantially form a cylinder having a diameter slightly less than the diameter D of the primary hole 2. The spring arms 16 are recessed in axial grooves 20, 22 in the outer surfaces of the nut 10 and the segments 14 respectively so that the arms 16 do not interfere with insertion of the anchor into the hole. The recessing of the spring arms 16 in this manner also provides torque transfer between the nut 10 and segments 14 and which prevents the anchor from rotating during initial tightening of the bolt with which the anchor is used. The internal surfaces of the segments 14 are shaped to form a critical control function in ensuring that the anchor is correctly set within the undercut 4. In particular, the inner surface of each segment 14 comprises, adjacent to the nut 10, a base portion 24 of part-cylindrical form and of such a diameter that when the segments are in their expanded configuration the part-cylindrical base portions 24 lie on an imaginary cylindrical surface of a diameter slightly larger than the thread tip diameter of the bolt Which is intended to be inserted into the nut 10 whereby to permit passage of the bolt. In its outer portion 26, that is the portion remote from the nut 10, the inner surface of each segment is of part-cylindrical form but of a diameter substantially less than the thread tip diameter of the bolt whereby when the segments 14 are in their contracted condition which they assume during insertion of the anchor into the primary hole, the part-cylindrical surface portions 26 lie on an imaginary cylindrical surface having a diameter slightly larger than the shank diameter of an insertion tool to be described. The axial outer end face 28 of each segment 14 lies, in the expanded configuration of the segments 14, on an imaginary annular surface corresponding to that of the abutment shoulder 6 of the undercut. The radially inner part of each end face 28 carries a segment 30 of a collar 32 which is defined in the contracted condition of the anchor segments 14 and which projects axially outwardly for purposes which will be described hereinafter. The collar 32 itself has a conical outer surface which tapers towards the open end of the hole 2. The retainer clip 18 also includes projecting lugs 34 by which a compression coil spring 36 is carried to project towards the base 8 of the hole 2.

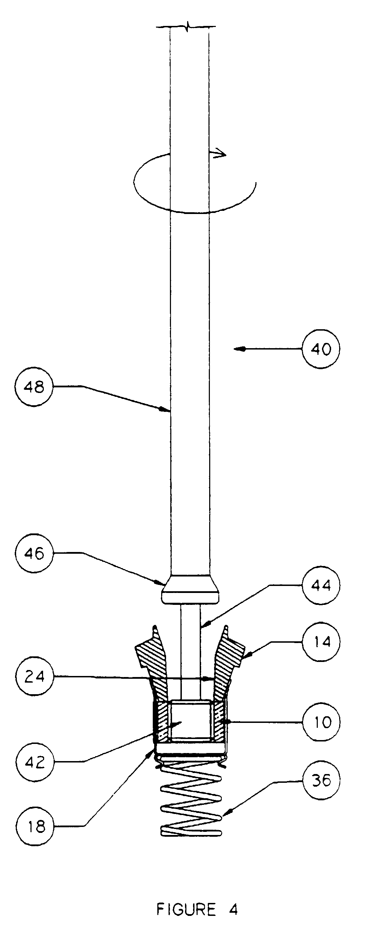

As shown in Figure 4, the insertion tool 40 comprises at its tip or inner end a threaded section 42 of the same thread form as that of the bolt and of a length approximately equivalent to the length of the nut 10 and, outwardly of the threaded section, a cylindrical shank 44 which is of a size to extend through the cylindrical surface portions 26 of the anchor segments 14 when in their contracted configuration. Outwardly of the shank 44, the tool has a cup section 46 of conical form facing towards the tip of the tool for the purposes to be subsequently described, and, beyond that, a shaft 48 which forms a handle which is grasped by the operator.

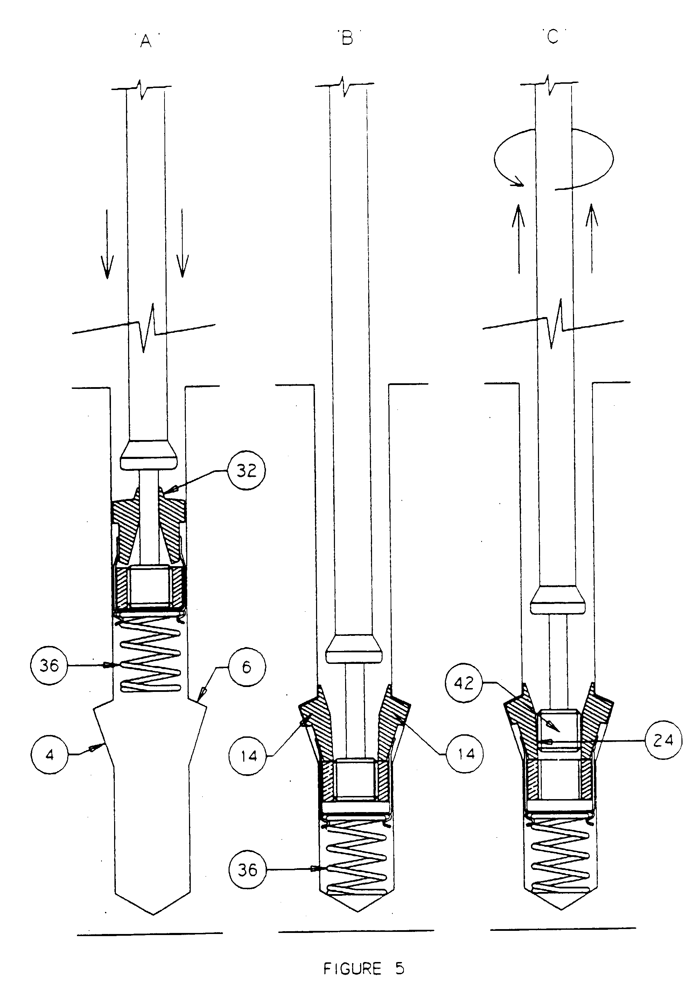

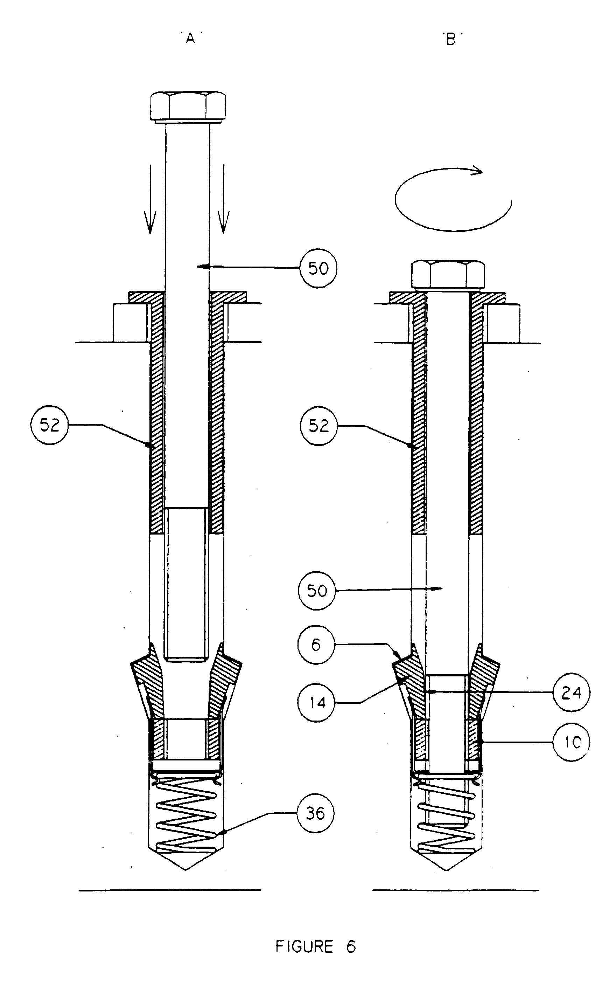

To insert the anchor into the hole after formation of the undercut, the anchor is mounted on the tip end of the tool 40 by screwing the threaded section 42 of the tool into the nut 10 of the anchor. It is to be noted that this action occurs when the anchor is outside of the hole and the anchor segments 14 are in their expanded configuration whereby the threaded section 42 of the tool can pass through the large diameter cylindrical surface defined by the base portions 24 of the segments 14 and into threaded engagement with the nut 10. With the anchor so mounted on the tool (as shown in Fig. 4), the anchor can then be inserted into the hole. During the initial part of the insertion of the anchor into the hole, advance of the anchor into the hole causes the anchor segments 14 to be displaced radially inwardly into their contracted configurations against the bias of the spring arms 16 and in which they assume a diameter which permits them to pass through the primary hole (see Figure 5A). When the anchor reaches a position at which the segments 14 are fully within the undercut 4, the spring bias of the arms 16 will cause the segments 14 to displace outwardly into their expanded configuration whereby the axial end faces 28 of the segments 14 will displace outwardly into engagement behind the abutment shoulders 6 on the undercut (see Figure 5B). The operator will sense a distinct click or snap when this action happens. In addition, when the anchor approaches this position, the compression spring 36 will engage the base 8 of the hole and the operator will also sense increased resistance as the spring 36 starts to be compressed. If the anchor has been properly set within the undercut, the tool 40 can be withdrawn from the anchor by unscrewing the threaded section 42 from the nut 10 and withdrawing this section through the large diameter cylindrical surface defined by the base portions 24 of the segments 14 and which, if the anchor has been correctly set, will be of a diameter which permits such withdrawal (see Figure 5C). An anchor bolt 50 can then be inserted into the hole and screwed into the nut 10 as shown in Figures 6A and 6B. When the bolt 50 is fully tightened the anchor segments 14 act as struts in compression to transfer loading between the nut 10 and the abutment shoulder 6 at the end of the undercut, the segments 14 being formed of a metal or other material of appropriate strength to withstand the compressive loading. The outer face of the nut 10 bears directly against the end face of the segments 14 and the circular outer profile of the nut 10 ensures maximum surface area for load transmission and hence reduced stress in relation to a configuration in which the nut 10 is of conventional hexagonal form. It is to be noted that in the set condition of the anchor the anchoring force is predominantly a compressive force between the segments 14 and the shoulder 6 of the undercut. Some prior undercut anchors utilised a conical expansion element which set the anchor by expanding anchoring segments outwardly into engagement with the peripheral wall of the undercut and this radial outwards expansion was itself a significant factor in the anchorage effect. In situations where the surrounding concrete is cracked or liable to cracking, the radially outwards expansion under loading might cause further cracking leading to reduced anchorage strength. Although in the anchor of the preferred embodiment the segments 14 are outwardly biased by the spring arms 16, the outwards bias is only sufficient to move the segments into their correct positions during setting and does not in itself provide any anchorage effect which, as stated above, is provided by a compressive loading acting against the shoulder 6 of the undercut. Preferably, and as illustrated, a tubular spacer 52 surrounds the bolt shank in the outer part of the hole 2. The spacer 52 improves the shear strength of the anchor assembly and also acts to locate and guide the bolt 50 through the hole during installation.

When the bolt 50 is fully engaged with the nut 10 the bolt shank will lie within the larger cylindrical surface defined by the base portions 24 of the segments and will prevent the segments 14 from displacing inwardly. Further, the bolt is able to be removed and replaced without disturbing the setting of the anchor as the spring 36 will maintain the anchor in position within the hole if the bolt has been removed.

As previously described, an operator can feel when the anchor is set within the undercut during insertion as the segments 14 will expand outwardly and snap into engagement behind the shoulder 6 of the undercut. The operator will sense this action and will also hear a "click". Also the operator will feel the compression of the coil spring 36 as it engages the bottom of the hole 8.

It may, sometimes, occur that the undercut is not properly formed and/or that the anchor does not properly set within the undercut, but this might not be sensed by the operator who will probably still detect the "click" as the segments 14 expand outwardly on entering the undercut. However, incorrect undercutting or setting will result in insufficient outwards displacement of the segments 14 when they enter the undercut.

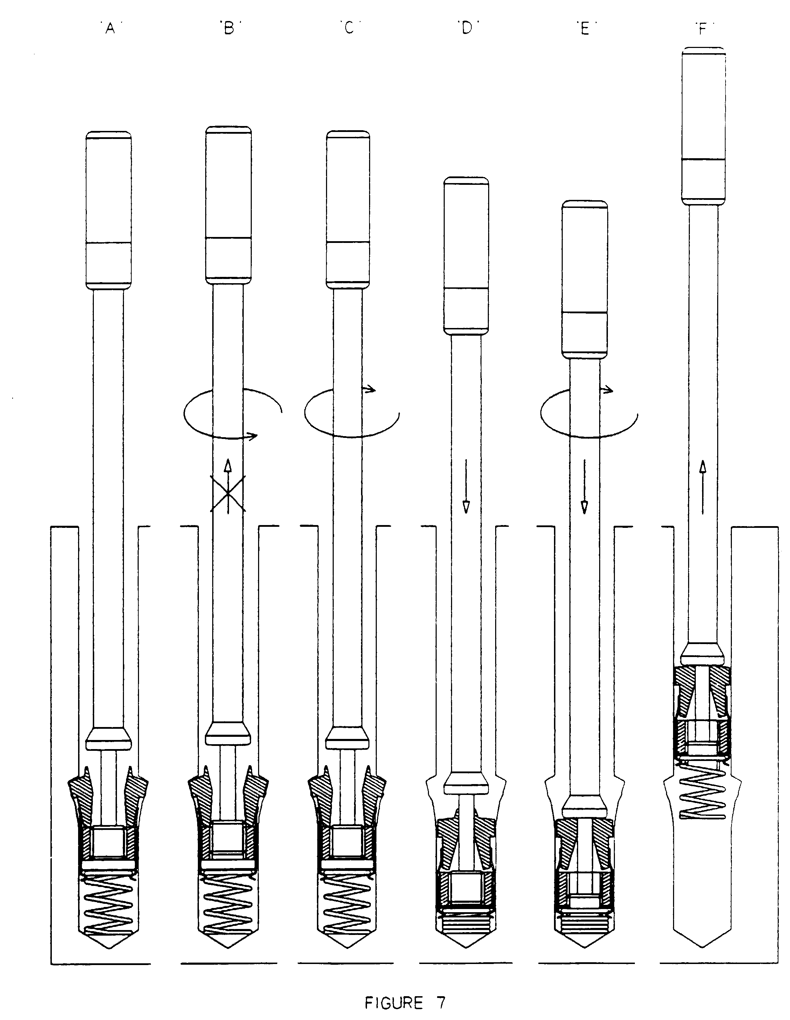

The insufficient outwards displacement of the segments 14 will mean that the interior surface defined within the base portion 24 of the interior of the segments 14 is not established to a size sufficient to permit withdrawal of the threaded section 42 of the insertion tool. In particular, the resulting surface, will not be a cylindrical surface of a diameter slightly larger than the tip diameter of the thread, but rather a conical surface tapering towards the outer end of the hole 2 and which will block withdrawal of the threaded section 42 of the tool. Accordingly, although the operator might feel and hear that setting has taken place, when the tool is attempted to be removed by unscrewing from the nut 10 this movement will be impeded by interference between the threaded section of the tool and the interior surface of the segments. This action is illustrated schematically in Figures 7A and 7B. It is then necessary to remove the improperly set anchor. In most cases incorrect setting will result from incorrect undercutting and, with the anchor removed, the undercut can in many instances be properly reformed. In order to remove the anchor, the threaded section 42 of the tool is screwed back into the nut 10 (see Figure 7C) and the anchor is pushed downwardly against the bias of the compression spring 36 into the bottom section of the hole beyond the undercut. Upon entering the bottom section the segments 14 will be moved radially inwardly into their contracted configuration as they pass from the undercut section into the bottom section so that when the anchor is within the bottom section the segments will be fully contracted as shown in Figure 7D. At this stage, the threaded section 42 of the tool is then screwed further inwardly into the nut 10 so that the cup 46 on the tool beyond the shank 44 moves over the segments 30 of the collar 32 at the outer face of the anchor segments 14 and thereby clamps the segments in their contracted condition. With the anchor segments 14 so secured, the anchor can then be withdrawn through the hole and, as will be appreciated, the clamping of the segments in this way will preclude the segments 14 from re-expanding as the anchor is withdrawn through the undercut section.

Instead of forming a conical collar 32 on the outer end of the segments for capture within the open cup 46 of the installation tool to permit removal of the anchor, the cup 46 can instead be provided with an internal conical formation equivalent to that of the outer end faces 28 of the segments 14 in order, in a similar way, to retain the segments in their contracted configuration to permit withdrawal.

The undercut anchor particularly described, although constructed from a number of separate elements, is supplied assembled and does not for insertion require disassembly into separate component parts Which might become lost. The tool which is required to insert the anchor cannot be removed if the anchor is improperly set and accordingly the system ensures that correct setting must take place. In the event of incorrect setting, the same tool is used to remove the anchor. The ability to remove the anchor to permit re-cutting of the undercut is of particular practical importance as in most prior systems the anchor, when within the hole, cannot be removed which means that if for any reason the anchor is not properly set a fresh hole in a different location is required. Of course, the tool can also be used to remove the anchor when required under other circumstances. When the anchor has been properly set and the bolt is in position, the bolt ensures that the setting of the anchor is maintained and cannot be disturbed. If it does occur that there is an increase in the size of the main hole or of the undercut, the anchoring effect is less likely to be compromised than with designs which rely on anchorage occurring by means of a conical expansion element which forces expansion segments radially outwardly. Generally speaking, any cracking of the surrounding concrete, particularly as may occur if the anchor is within the tensile zone, will not affect the integrity of the anchorage.

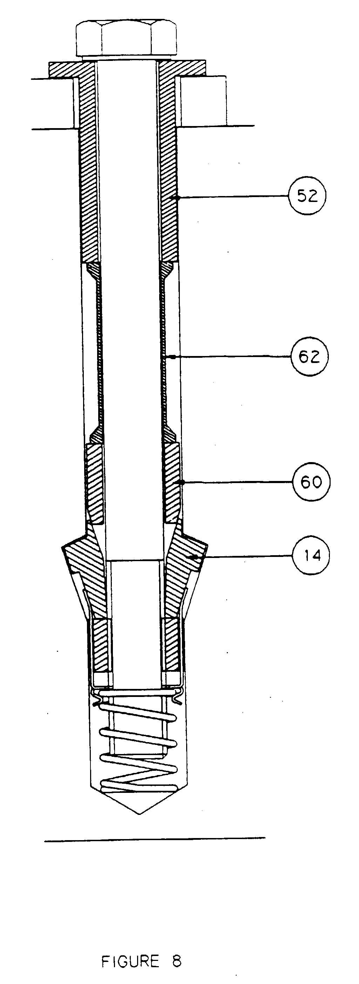

In the modification shown in Figure 8, the tubular spacer 52 which is installed in the hole after removal of the tool and before insertion of the bolt carries at its inner end a sleeve 60 which lies closely adjacent the wall of the hole 2 in the zone immediately outwardly of the abutment shoulder 6 of the undercut. The sleeve 60 performs two functions. Firstly, it acts to buttress the hole wall from collapsing inwardly in the zone of the abutment shoulder 6 under the compressive loading applied to the abutment shoulder 6 by the anchor segments 14 when the bolt is tightened. Secondly, the inner end of the sleeve 60 projects a small distance into the zone of the undercut to engage the inner surface of the anchor segments 14 and to thereby force the segments 14 into firm engagement with the conical surface of the undercut. As shown, the sleeve 60 is connected to the end of the spacer 52 by a further sleeve 62 of reduced wall thickness. The sleeve 62 is able to reduce in axial length by outwards deformation in order to allow the bolt to clamp a component in tight engagement with the surface of the masonry. However, the primary function of the sleeve 62 is to permit the sleeve 60 to be forced into the correct axial position relative to the undercut in which it engages the segments, and when in that position excess length of the sleeve assembly will, on tightening the bolt, be taken up by length reduction of the sleeve 62, the sleeve assembly consisting of spacer 52 and sleeves 60, 62 being slightly over-length to ensure that this happens. As shown, the spacer 52, sleeve 60 and sleeve 62 are assembled into a single component for installation within the hole and may be supplied assembled on the bolt and anchor to minimise the number of separate components for distribution. The action of the sleeve 60 inhibits collapse of the stressed concrete back into the hole and thereby improves the integrity of the concrete and the stability of the anchoring system and also ensures that the anchoring segments 14 are fully deployed into their expanded configuration.

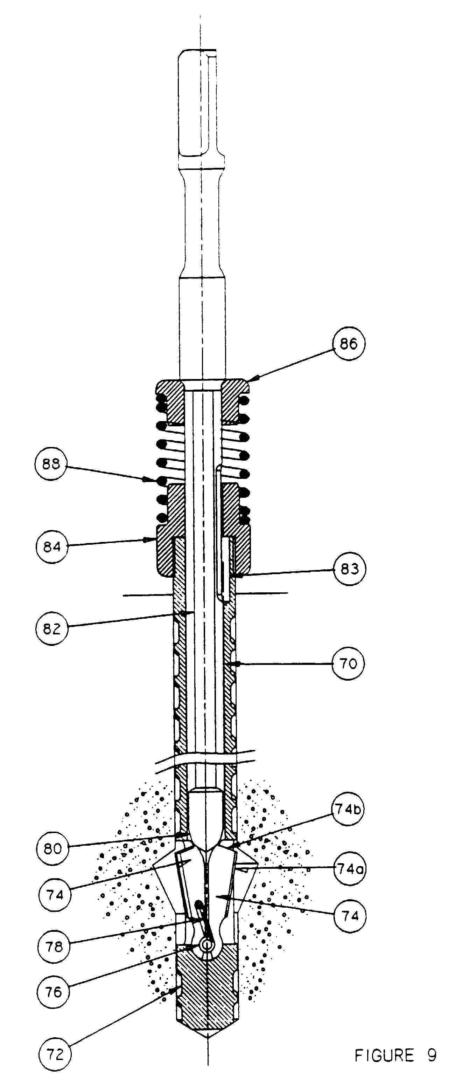

Figure 9 illustrates a drill which can be used to form the undercut, this undercut drill being used after drilling the primary hole 2 using a conventional masonry drill. The undercut drill comprises a body 70 of hollow construction. The tip portion 72 of the body is not sharpened but is shaped to form a bearing surface by which the drill is supported against the base 8 of the primary hole previously drilled. Cutters 74 are supported by the tip portion 72 at the required distance of the undercut from the base 8 of the primary hole. There are two such cutters 74 each pivotally mounted to the tip portion 72 for pivotal movement between a retracted position in which the cutters lie within the hollow drill body and an extended position in which they project radially outwardly through apertures in the drill body so that exposed cutting edges 74A, 74B are able to form the conical surface 4 of the undercut and the annular abutment shoulder 6, respectively. The pivot mounting for the cutters is shown at 76 in Figure 9 and the cutters 74 are pivotally biased by a spring 78 into their retracted positions within the drill body 70.

The outwards movement of the cutters 74 required to form the undercut is produced by a wedge-shaped cam 80 at the inner end of a shaft 82 extending through the hollow part of the drill body 70. The drill body 70 is mounted on the shaft 82 by a splined or keyed connection 83 which permits the drill body 70 and shaft 82 to rotate in unison while enabling the shaft 82 to be displaced axially through the drill body 70 so that the cam 80 at its inner end can act on internal faces of the cutters 74 and progressively drive the cutters 74 outwardly in the manner of a wedge to progressively cut the required undercut during rotation of the shaft 82 and drill body 70. The innermost position of the shaft 82 relative to the drill body is determined by the interengagement of axial stops 84, 86 on the drill body 70 and shaft 82 respectively and this, in turn, determines the size of the undercut. A compression spring 88 is installed on the shaft 82 between the stops 84, 86 to return the shaft 82 to an axial position in which the conical cam 80 is removed from interaction with the cutters 74. The drill body 70 is provided with helical external flutes to facilitate removal of the cut material during cutting. The outer end of the shaft 82 can be mounted in the chuck of a conventional hammer drill. During operation, the operator applies an axial inwards force to displace the shaft 82 longitudinally relative to the drill body 70 to force the cutters 74 progressively outwards and thereby form the undercut, formation being achieved when the stop 86 on the shaft 82 abuts against the stop 84 on the drill body.

As will be apparent, the final shape of the undercut will be determined by the shape of the cutters 74, the position of the pivot axis 76, the shape of the cam 80 and the maximum axial displacement of the cam 80 as determined by the stops 84, 86 and these aspects can be altered to provide an undercut of required shape to suit the form of the undercut anchor.

The drill particularly described is of relatively simple construction and can be produced at considerably less cost than certain current undercutting drilling systems. The drill may, of course, be used for forming undercuts for anchors different from that described herein. By appropriate adaptation of the cutters and of their mounting in relation to the expansion cam, this construction of drill could be used to form an undercut of a form which widens towards the base of the primary hole to suit existing undercut anchors which require that form of undercut.

The embodiments have been described by way of example only and modifications are possible within the scope of the invention as defined by the claims.

## Claims

1. A masonry anchor for use in a hole having along its length an undercut formation which tapers in cross-sectional area in a direction towards the base of the hole with the base end of the undercut being spaced from the base of the hole to define an end portion of the hole beyond the undercut, and a larger diameter portion of the undercut being connected to the wall of the hole outwardly of the undercut by an annular abutment surface which faces towards the base of the hole, said anchor comprising a nut portion (10) of a size to pass through the hole and, outwardly of the nut portion (10), an anchor portion (12) comprising a plurality of segments (14) biased outwardly to move between a contracted configuration in which the anchor portion is of an outside diameter to pass through the hole and an expanded configuration in which the segments (14) displace outwardly into the undercut into a formation which substantially corresponds with that of the undercut, the segments (14) having an axially outer face (28) adapted to bear against the annular abutment surface of the undercut in the expanded configuration whereby the segments (14) act as struts in compression to transfer compressive loading to the annular abutment surface of the undercut when an anchoring bolt is tightened into the nut portion (10), characterised in that the anchor is arranged for installation into the hole by being mounted on the tip end of an installation tool (40) having a shank (44) of reduced cross-sectional size relative to the tip end, and the radially inner surfaces (24,26) of the segments (14) define a passage through which the tool shank (44) extends, the cross-sectional size of the passage being less than the thread diameter of the nut portion (10) until the segments (14) are in their expanded condition to thereby preclude release of the tip end of the tool (40) from the anchor after installation if the segments (14) are not correctly deployed into their expanded configuration within the undercut.

2. A masonry anchor according to claim 1, wherein the nut portion (10) and anchor portion (12) are capable of being pushed deeper into the hole causing the segments (14) to move into their contracted configuration thereby permitting withdrawal of the anchor from the hole.

3. A masonry anchor according to claim 2, wherein withdrawal is effected using the tool (40) and the segments (14) are retained in their retracted position for withdrawal.

4. A masonry anchor according to any one of claims 1 to 3 in combination with an anchoring bolt (50) engageable with the nut portion (10), said bolt including means (60) operable to force the segments (14) into engagement with the undercut when the bolt (50) has been screwed into the nut portion (10).

5. A masonry anchor according to claim 4, wherein the means (60) for forcing the segments (14) into engagement with the undercut is formed by a sleeve (52,60) around a shank of the bolt (50), the inner end portion of the sleeve being engageable with the internal surfaces of the segments (14) to force the segments (14) into their fully expanded configuration.

6. A masonry anchor according to claim 5, wherein the sleeve (52,60) includes a portion (62) capable of axial collapse to permit length reduction of the sleeve as the bolt is tightened.

7. A masonry anchor as claimed in any one of claims 1 to 6 in combination with a tool for insertion of the anchor, wherein the tool (40) comprises a shank (44) arranged to extend into the hole and having at an inner portion a threaded section (42) for engagement with the thread of the nut portion (10), said shank (44) being at a position adjacent the threaded section (42) of a size such that the segments (14) can contract to permit insertion into the hole.

8. An anchor and tool combination as claimed in claim 7, wherein the tool (40) is also effective to permit withdrawal of the anchor by engagement of its threaded section (42) with the nut portion (10) of the anchor, pushing the anchor deeper into the hole to contract the segments (14) and withdrawing the anchor with the segments (14) being retained in their retracted state.

## Patentansprüche

1. Maueranker zur Verwendung in einem Loch, das in seiner Länge eine zum Lochgrund hin sich im Querschnitt verjüngende Hinterschneidung aufweist, wobei das dem Lochgrund zugewandte Ende der Hinterschneidung von diesem einen Abstand hat, der einen Endabschnitt des Lochs jenseits der Hinterschneidung definiert, und ein im Durchmesser größerer Teil der Hinterschneidung über eine dem Lochgrund zugewandte ringförmige Anschlagfläche an die außerhalb der Hinterschneidung gelegene Lochwand anschließt, wobei der Anker einen Schraubmutterabschnitt (10) aufweist, der so bemessen ist, daß er durch das Loch paßt, sowie außerhalb des Schraubmutterabschnitts (10) einen Ankerabschnitt (12) mit mehreren Segmenten (14), die so auswärts vorgespannt sind, daß sie sich zwischen einer zusammengezogenen Konfiguration, in der der Ankerabschnitt einen durch das Loch passenden Außendurchmesser aufweist, und einer erweiterten Konfiguration bewegen, in der die Segmente (14) auswärts in die Hinterschneidung zu einer Gestalt versetzt sind, die derjenigen der Hinterschneidung im wesentlichen entspricht, wobei die Segmente (14) eine axial äußere Fläche (28) aufweisen, die so ausgelegt ist, daß sie in der ausgedehnten Konfiguration an der ringförmigen Anschlagfläche der Hinterschneidung anliegt und die Segmente (14) somit als Druckstäbe (14) wirken, die beim Festziehen eines Ankerbolzens in dem Schraubmutterabschnitt (10) Drucklast auf die ringförmige Anschlagfläche der Hinterschneidung übertragen, dadurch **gekennzeichnet**, daß der Anker dadurch in das Loch einsetzbar ist, daß er an der Spitze eines Einsetzwerkzeugs (40) befestigt wird, das einen Schaft (44) mit gegenüber der Spitze verringertem Querschnitt aufweist, wobei die radial inneren Flächen (24, 26) der Segmente (14) eine Durchführung definieren, durch die der Werkzeugschaft (44) verläuft, und wobei der Querschnitt der Durchführung geringer ist als der Gewindedurchmesser des Schraubmutterabschnitts (10), bis sich die Segmente (14) in ihrem ausgedehnten Zustand befinden, wodurch verhindert wird, daß sich nach dem Einsetzen die Spitze des Werkzeugs (40) von dem Anker lösen läßt, wenn sich die Segmente (14) nicht ordnungsgemäß in ihre ausgedehnte Konfiguration in der Hinterschneidung entfaltet haben.

2. Maueranker nach Anspruch 1, wobei der Schraubmutterabschnitt (10) und der Ankerabschnitt (12) tiefer in das Loch hineindrückbar sind, was bewirkt, daß sich die Segmente (14) in ihre zusammengezogene Konfiguration bewegen und dadurch ein Herausziehen des Ankers aus dem Loch gestatten.

3. Maueranker nach Anspruch nach Anspruch 2, wobei das Herausziehen unter Verwendung des Werkzeugs (40) geschieht und die Segmente (14) zum Herausziehen in ihrer zurückgezogenen Stellung gehalten werden.

4. Maueranker nach einem der Ansprüche 1 bis 3 in Kombination mit einem in den Schraubmutterabschnitt (10) einschraubbaren Ankerbolzen (50), wobei der Bolzen eine Einrichtung (60) aufweist, die so betätigbar ist, daß sie die Segmente (14) in Eingriffmit der Hinterschneidung drückt, wenn der Bolzen (50) in den Schraubmutterabschnitt (10) eingeschraubt ist.

5. Maueranker nach Anspruch 4, wobei die Einrichtung (60), die die Segmente (14) in Eingriff mit der Hinterschneidung drückt, von einer den Schaft des Bolzens (50) umgebenden Hülse (52, 60) gebildet ist, deren innerer Endabschnitt in Eingriff mit den inneren Flächen der Segmente (14) zu bringen ist, um diese in ihre völlig ausgedehnte Konfiguration zu drücken.

6. Maueranker nach Anspruch 5, wobei die Hülse (52, 60) einen axial kollabierbaren Abschnitt (62) aufweist, um beim Spannen des Bolzens eine Verkürzung der Länge der Hülse zu ermöglichen.

7. Maueranker nach einem der Ansprüche 1 bis 6, in Kombination mit einem Werkzeug zum Einsetzen des Ankers, wobei das Werkzeug (40) einen in das Loch einführbaren Schaft (44) mit einem an einem inneren Abschnitt vorgesehenen Gewinde (42) zum Eingriff in das Gewinde des Schraubmutterabschnitts (10) aufweist, wobei der Schaft (44) an einer Stelle nahe dem Gewindeabschnitt (42) so bemessen ist, daß sich die Segmente (14) zusammenziehen lassen, um das Einsetzen in das Loch zu ermöglichen.

8. Kombination aus Anker und Werkzeug nach Anspruch 7, wobei das Werkzeug (40) auch zum Herausziehen des Ankers ausgelegt ist, indem sein Gewindeabschnitt (42) in den Schraubmutterabschnitt (10) des Ankers eingreift, der Anker tiefer in das Loch hineingedrückt wird, um die Segmente (14) zusammenzuführen, und der Anker mit den in ihrem zurückgezogenen Zustand gehaltenen Segmenten (14) herausgezogen wird.

## Revendications

1. Dispositif d'ancrage dans une maçonnerie, destiné à être utilisé dans un trou et possédant, sur son étendue en longueur, une configuration en contre-dépouille, dont l'aire en coupe transversale diminue en direction du fond du trou, l'extrémité de base de la partie en contre-dépouille étant espacée du fond du trou de manière à définir une partie d'extrémité du trou au-delà de la partie en contre-dépouille, et une partie de diamètre accru de la partie en contre-dépouille étant raccordée à la paroi du trou à l'extérieur de la partie en contre-dépouille, au moyen d'une surface annulaire de butée qui est tournée vers le fond du trou, ledit dispositif d'ancrage comprenant une partie en forme d'écrou (10) possédant une taille lui permettant de pénétrer dans le trou et, à l'extérieur de la partie en forme d'écrou (10), une partie d'ancrage (12) comprenant une pluralité de segments (14) sollicités vers l'extérieur de manière à se déplacer entre une configuration contractée, dans laquelle la partie d'ancrage possède un diamètre extérieur lui permettant de passer à l'intérieur du trou, et une configuration déployée, dans laquelle les segments (14) se déplacent vers l'extérieur pour pénétrer dans la partie en contre-dépouille en prenant une configuration qui correspond pour l'essentiel à celle de la partie en contre-dépouille, les segments (14) possédant une face (28) extérieure du point de vue axial et adaptée pour s'appliquer contre la surface de butée annulaire de la partie en contre-dépouille dans la configuration déployée, ce qui a pour effet que les segments (14) agissent en tant qu'entretoises travaillant en compression pour transférer une charge de compression à la surface annulaire de butée de la partie en contre-dépouille lorsqu'un boulon d'ancrage est serré dans la partie formant écrou (10), caractérisé en ce que le dispositif d'ancrage est agencé de manière à être installé dans le trou en étant monté sur l'extrémité en forme de pointe d'un outil d'installation (40) possédant une tige (44) ayant des dimensions réduites en coupe transversale par rapport à l'extrémité en forme de pointe, et les surfaces (24,26), intérieures du point de vue radial, des segments (14) définissent un passage dans lequel s'étend la tige (44) de l'outil, les dimensions en coupe transversale du passage étant inférieures au diamètre du filetage de la partie formant écrou (10) jusqu'à ce que les segments (14) soient dans leur état déployé, de manière à empêcher la libération de l'extrémité de la pointe de l'outil (40) à partir du dispositif d'ancrage après l'installation si les segments (14) ne sont pas correctement déployés dans leur configuration déployée à l'intérieur de la partie en contre-dépouille.

2. Dispositif d'ancrage dans une maçonnerie selon la revendication 1, dans lequel la partie formant écrou (10) et la partie d'ancrage (12) peuvent être repoussées plus profondément dans le trou, ce qui amène les segments (14) à passer dans leur configuration contractée en permettant de ce fait un retrait du dispositif d'ancrage hors du trou.

3. Dispositif d'ancrage dans une maçonnerie selon la revendication 2, dans lequel le retrait est exécuté en utilisant l'outil (40), et les segments (14) sont retenus dans leur position rétractée pour le retrait.

4. Dispositif d'ancrage dans une maçonnerie selon l'une quelconque des revendications 1 à 3, en combinaison avec un boulon d'ancrage (50) pouvant engrener avec la partie formant écrou (10), ledit boulon comprenant des moyens (60) pouvant agir de manière à repousser les segments (14) en contact avec la partie en contre-dépouille lorsque le boulon (50) a été vissé dans la partie formant écrou (10).

5. Dispositif d'ancrage dans une maçonnerie selon la revendication 4, dans lequel les moyens (60) servant à repousser les segments (14) de manière qu'ils s'engagent dans la partie en contre-dépouille sont formés par un manchon (52, 60) entourant la tige du boulon (50), la partie d'extrémité inférieure du manchon pouvant coopérer avec les surfaces intérieures des segments (14) pour amener à force les segments (14) dans leur configuration totalement déployée.

6. Dispositif d'ancrage dans une maçonnerie selon la revendication 5, dans lequel le manchon (52, 60) comprend une partie (62) pouvant s'aplatir axialement de manière à permettre une réduction de longueur du manchon lorsque le boulon est serré.

7. Dispositif d'ancrage dans une maçonnerie selon l'une quelconque des revendications 1 à 6, en combinaison avec un outil pour l'insertion du dispositif d'ancrage, et dans lequel l'outil (40) comprend une tige (44) disposée de manière à s'étendre dans le trou et possédant, au niveau d'une partie inférieure, une section filetée (42) destinée à engrener avec le filetage de la partie formant écrou (10), ladite tige (44) étant située dans une position adjacente à la section filetée (42) et ayant des dimensions telles que les segments (14) peuvent se contracter pour permettre l'insertion dans le trou.

8. Ensemble combiné dispositif d'ancrage et outil selon la revendication 7, dans lequel l'outil (40) agit également de manière à permettre un retrait du dispositif d'ancrage par engrènement de sa section filetée (42) avec la partie formant écrou (10) du dispositif d'ancrage, enfoncement du dispositif d'ancrage plus profondément dans le trou pour contracter les segments (14) et retrait du dispositif d'ancrage avec les segments (14) retenus dans leur état rétracté.
